# EUROPEAN PATENT APPLICATION

(11) **EP 4 672 596 A1**
(43) Date of publication of application: **31.12.2025**
(21) Application number: 24185055.1
(22) Date of filing: 27.06.2024
(51) Int. Cl.: H02S 20/10, H02S 20/30, F24S 25/16, F24S 25/617

(54) **MOUNTING STAND WITH A STABILIZATION ELEMENT IN BETWEEN REAR SIDES OF PHOTOVOLTAIC MODULES**

(71) Applicant: REG.LAS Schweiz AG, 6017 Ruswil (CH)
(72) Inventor: GRÜTER, Josef-Urs, 6017 Ruswil (CH)
(74) Representative: Grünecker Patent- und Rechtsanwälte PartG mbB

(57) **Abstract**

A mounting stand (4) for at least two photovoltaic modules comprises a mounting structure (5), wherein the mounting structure (5) is adapted to be attached to the ground (7) or a support (8) and wherein the mounting structure (5) is adapted for mounting a first photovoltaic module (2) and a second photovoltaic module (3) thereon. The mounting stand (4) comprises a stabilization element (6), wherein the stabilization element (6) is configured to support an inner region (22) of a rear side (21) of the first photovoltaic module (2) and to support an inner region (32) of a rear side (31) of the second photovoltaic module (3). The invention relates to a photovoltaic module system (1) comprising the mounting stand (4). The invention relates to a method for adjusting a photovoltaic module system (1) and to a use of a mounting stand (4).

## Description

The invention relates to a mounting stand for at least two photovoltaic modules, to a photovoltaic module system, to a method for adjusting a photovoltaic module system, and to a use of a mounting stand.

Structures for mounting photovoltaic modules are known. FR304108481 discloses a double support frame for vertical or inclined mounting of solar modules wherein the double support frame comprises two support frames being arranged back to back.

The objective of the invention is to provide an improved mounting stand for photovoltaic modules or an improved method for adjusting a photovoltaic module system.

According to a first aspect of the invention, a mounting stand for at least two photovoltaic modules comprises a mounting structure and a stabilization element. The mounting structure is adapted to be attached to the ground or a support. The mounting structure is adapted for mounting a first photovoltaic module and a second photovoltaic module thereon. The stabilization element is configured to support an inner region of a rear side of the first photovoltaic module and to support an inner region of a rear side of the second photovoltaic module.

The inner region may have a distance of at least 5 millimeters, in particular at least 10 millimeters, at least 20 millimeters or at least 50 millimeters, to the outer edge of the respective photovoltaic module.

Advantageously, the mounting stand may reinforce the at least two photovoltaic modules against at least one external load, in particular a static load, dynamic load or torsion. Static load may be caused by snow. Dynamic load may be due to wind gusts, updrafts, downdrafts, vibrations, wind pressure forces or wind suction forces. Torsion forces may be due to non-uniform load acting on the photovoltaic module. In particular, the mounting stand may safely mount the first photovoltaic module and second photovoltaic module for a wind suction load of up to 4500 Pascal, up to 4000 Pascal or up to 3500 Pascal. This may enable the mounting stand to be used in difficult environmental conditions.

The mounting stand may be suitable to be deployed in alpine regions, in particular in altitudes above 2000 meters above sea level, in particular near mountain stations, or in marine environments or in dry environments, in particular deserts or savannas. The mounting stand may render the at least one photovoltaic module more robust against strong loads, which may reduce the risk of microcracks in the at least one photovoltaic module. Microcracks may damage photovoltaic modules. The mounting stand may render the at least one photovoltaic module more sustainable.

The mounting stand is adapted to be attached to the ground, in particular to be anchored in soil, or to be attached to a support, in particular to a rail structure. The mounting stand is adopted to be located on a roof top or on a free plane.

The mounting stand may be adapted to mount standardized photovoltaic modules. The mounting stand may arrange one or more photovoltaic modules, in particular two or more photovoltaic modules, with an inclination or vertically. In particular, the mounting stand may allow to arrange the one or more photovoltaic modules, in particular two or more photovoltaic modules, back to back. The mounting stand may arrange the one or more photovoltaic modules such that the one or more photovoltaic modules capture direct sunlight, reflected sunlight or a fraction of sunlight, in particular diffuse reflections, in particular a fraction of the surface albedo.

The mounting stand may be arranged between two photovoltaic modules such that the mounting stand and the two photovoltaic modules form a sandwich-like arrangement. Advantageously, the sandwich-like arrangement may improve the structural stability of the two photovoltaic modules. In particular, the structural stability of the sandwich-like arrangement may be higher than the structural stability of an individual photovoltaic module.

The stabilization element may be configured and/or arranged to reinforce the photovoltaic modules. The stabilization element may be configured and/or arranged to increase the static stability of the photovoltaic modules. The stabilization element may be configured and/or arranged to reinforce the photovoltaic modules against static loads, dynamic loads and/or torsion. Photovoltaic modules may buckle or vibrate due to suction load or pressure load. Advantageously, the stabilization element may reduce buckling or vibrations of the photovoltaic modules, in particular a buckling amplitude or a vibration amplitude.

The stabilization element may be configured to support a central region of the rear side of the first photovoltaic module and to support a central region of the rear side of the second photovoltaic module. Under load, the central region of at least one of the photovoltaic modules may be prone to the largest amplitude. Supporting the central region of the rear side of the first photovoltaic module and the second photovoltaic module may improve the stability of at least one of the photovoltaic modules. Supporting the central region may decrease the amplitude of buckling of at least one of the photovoltaic modules or reduce an amplitude of a vibration of at least one of the photovoltaic modules.

The stabilization element may be one integral element of the mounting stand. Assembling or maintaining the mounting stand may be more efficient. The stabilization element may increase the static stability of the mounting stand.

Alternatively, the stabilization element may comprises one or more components, such as several structural elements combined with each other.

The stabilization element may comprise any one or several of an actuator, a motor, a hydraulic system, an expandable and contractible body, such as an inflatable pneumatic or hydraulic body, or fastening elements. The stabilization element may be removably connected to the mounting stand.

The mounting stand may allow to alter the inclination of one or both of the first photovoltaic module and the second photovoltaic module. The inclination of one or both of the first photovoltaic module and the second photovoltaic module may be altered in a range of up to 60 degrees, up to 30 degrees or up to 10 degrees. The mounting stand may be configured to pivotally mount one or both of the first photovoltaic module and the second photovoltaic module around a pivoting axis. The pivoting axis may be parallel to a horizontal direction. One or both of the first photovoltaic module and the second photovoltaic module may alter the inclination by moving or by being driven from a first position to a second position. For example, the first and second position may be arranged in at least one frame or on at least one rail of the mounting structure. Advantageously, one or both of the first photovoltaic module and the second photovoltaic module may reflect light, in particular onto the other or another photovoltaic module. This may increase the electrical power output of the photovoltaic modules. The inclination may be adjusted depending on the diurnal cycle to optimize the incident angle of sun light on the one or both of the first photovoltaic module and the second photovoltaic module. Altering the inclination of one or both of the first photovoltaic module and the second photovoltaic module may advantageously allow for seasonal adjustment of the inclination. The increased inclination of one or both of the first photovoltaic module and the second photovoltaic module may improve cooling of one or both of the first and second photovoltaic module. Altering the inclination of one or both of the first photovoltaic module and the second photovoltaic module may increase the electrical power output of photovoltaic modules.

The stabilization element may be expandable and contractible to alter the inclination of one or both of the first photovoltaic module and the second photovoltaic module. The stabilization element can be expanded or contracted by a driving mechanism, in particular a hydraulic mechanism or a motor. The stabilization element may be thermally expandable and thermally contractible. Advantageously, the stabilization element may thermally expand if/when the ambient air temperature is larger, in particular during summer or daytime, and/or if/when the weather condition is sunny. Alternatively, the stabilization element will thermally contract if the ambient air temperature is lower, in particular during night or in winter, and/or if/when the weather condition is cloudy. Altering, in particular adjusting, the inclination of one or both of the first photovoltaic module and the second photovoltaic module may increase its or their efficiency.

According to a second aspect of the invention, a mounting stand for a photovoltaic module, in particular a first or a second photovoltaic module, comprises a mounting structure and a stabilization element. The mounting structure is adapted to be attached to the ground or a support. The mounting structure is adapted for mounting the photovoltaic module thereon. The stabilization element is configured to support an inner region of a rear side of the photovoltaic module. The stabilization element is configured to alter the inclination of the photovoltaic module.

Altering the inclination of the photovoltaic module may increase its electrical power output or increase the electrical power output of other photovoltaic modules. In particular, the other photovoltaic modules may be exposed to more solar energy due to reflections to increase the electrical power output. The inclination of the photovoltaic module may be altered to improve cooling of one or both of the first and second photovoltaic module. Altering the inclination of the photovoltaic module may advantageously allow for seasonal adjustment of its inclination. Alternatively or additionally, the inclination of the photovoltaic module may be adjusted depending on the diurnal cycle to first photovoltaic module.

The stabilization element may be thermally expandable and thermally contractible. Advantageously, the stabilization element may thermally expand when the ambient air temperature is larger, in particular during summer or daytime, and/or when the weather condition is sunny. The stabilization element may thermally contract if the ambient air temperature is lower, in particular during night or in winter, and/or when the weather condition is cloudy. Alternatively, the stabilization element may be expanded or contracted by an actuator, in particular a pneumatic or hydraulic compressor mechanism or a motor.

The inclination of one or both of the first photovoltaic module and the second photovoltaic module may alter only to an inclination angle of less than 60 degrees, in particular less than 45 degrees, less than 30 degrees or less than 15 degrees, degrees with respect to a vertical axis. The mounting stand may be configured to pivotally mount one or both of the first photovoltaic module and the second photovoltaic module around a pivoting axis. The pivoting axis may be in a horizontal plane. The pivoting axis may be orthogonal to the vertical axis. The inclination angle may be small enough to avoid partially covering another photovoltaic module. The inclination angle may be small enough to avoid casting shadow on another photovoltaic module. The inclination angle may be large enough to reflect light, in particular onto at least one other photovoltaic module. The inclination angle may be large enough to increase the electric power output of at least the first photovoltaic module.

The mounting structure of a mounting stand may be further adapted for mounting a third photovoltaic module, in particular for mounting a fourth photovoltaic module, a fifth photovoltaic module, a sixth photovoltaic module, a seventh photovoltaic module and/or an eighth photovoltaic module or for mounting more photovoltaic modules. Mounting a plurality of photovoltaic modules may increase the total electrical power output. Mounting a plurality of photovoltaic modules on a mounting structure of a mounting stand may reduce the number of mounting stands to be installed, which may render the installation process more efficient.

The mounting structure may support a peripheral region of the first photovoltaic module, and the stabilization element may be arranged at a distance to the peripheral region of the first photovoltaic module. The peripheral region may comprise less than the outer 50 millimeters, in particular less than the outer 20 millimeters, in particular less than the outer 10 millimeters or in particular less than the outer 5 millimeters, of the width or height of the photovoltaic module. The distance may be at least 0.5 millimeters, in particular 1 millimeter, in particular 10 millimeters, in particular more than 20 millimeters. In particular, the mounting structure may support a frame of the first photovoltaic module. The peripheral region of the first photovoltaic module may be adapted to be received or to be engaged by the mounting structure, in particular a clamp of the mounting structure. The arrangement of the stabilization element may improve the stability of the first photovoltaic module. In particular, the arrangement of the stabilization element may reduce a buckling amplitude of the first photovoltaic module or a vibration amplitude of the first photovoltaic module. The stabilization element may be arranged such that the stabilization element can support an inner region of the first photovoltaic module. In particular, the inner region is in a distance to the peripheral region of the first photovoltaic module. In particular, the stabilization element may be arranged to support a central region of the first photovoltaic module. The mounting structure may support nearly the entire or the entire rear side of the first photovoltaic module, in particular except a frame of the photovoltaic module.

The stabilization element may be configured to transmit a tensile force from one or both of the first photovoltaic module and the second photovoltaic module. Tthe stabilization element may reinforce one or both of the first photovoltaic module and the second photovoltaic module against tensile forces in a direction pointing outwards from the mounting stand, in particular wind suction forces. The stabilization element may be engaged with one or both of the first photovoltaic module and the second photovoltaic module. In particular, the stabilization element may be glued, screwed or attached by Velcro fastener to one or both of the first photovoltaic module and the second photovoltaic module. A removable connection may advantageously enable to exchange a photovoltaic module for repair or maintenance. A removable connection may render the mounting stand more sustainable.

The mounting structure or the stabilization element may be configured to pre-load the one or both of the first photovoltaic module and the second photovoltaic module. Advantageously, a buckling amplitude or a vibration amplitude may be reduced or dampened. A reduced or dampened buckling amplitude or vibration amplitude may reduce the risk of damage of the one or both of the first photovoltaic module and the second photovoltaic module.

A reinforcing layer may be attached to the rear side of the one or both of the first photovoltaic module and the second photovoltaic module. The reinforcing layer may be of glass, plastic, metal or wood.

According to a third aspect of the invention, a mounting stand for a photovoltaic module, in particular a first or a second photovoltaic module, comprises a mounting structure and a stabilization element. The mounting structure is adapted to be attached to the ground or a support. The mounting structure is adapted for mounting a first photovoltaic module thereon. The stabilization element is configured to transmit a tensile force from the photovoltaic module. The features related to the first aspect of the invention also apply to the second aspect of the invention. In particular, the stabilization element may advantageously reinforce the photovoltaic module, in particular against wind suction forces, to render the photovoltaic module more robust against strong loads or more sustainable.

The mounting structure may have a height and a width, which may both be larger than its depth. The mounting stand may be adapted such that the one or both of the first photovoltaic module and the second photovoltaic module are arranged at an angle larger than 30 degrees, in particular larger than 45 degrees, larger than 60 degrees or larger than 75 degrees, with respect to a horizontal axis. The horizontal axis may be in a horizontal plane, which is orthogonal to the vertical direction. The mounting stand may reduce or at least nearly prevent the deposition of objects in the environment of the photovoltaic modules, in particular aerosols, dust particles, salt or sand particles, stones, snow or hail.

The mounting stand may be symmetric regarding a vertical plane. The mounting stand may enable airflow in between the first photovoltaic module and the second photovoltaic module. The mounting stand may provide space, in particular between two photovoltaic modules. The space may be suitable for installing an object, in particular a guide case, electrical components of the at least two photovoltaic modules, an insect hotel, a windbreak, a cover, an enclosure and a design element.

The mounting stand may have two or more struts and an upper pivot axis, wherein struts are adapted to pivot around the pivot axis at least during installation of the mounting stand. The mounting stand may be foldable. The foldable mounting stand may enable an efficient installation of the mounting stand. The foldable mounting stand may be efficiently deinstalled. The foldable mounting stand may be efficiently transported, in particular in a folded state. The foldable mounting stand may enable an angle between photovoltaic modules. In particular, the mounting stand may be efficiently folded or unfolded. The foldable mounting stand may enable an inclination of photovoltaic modules to a horizontal plane.

The stabilization element, at least in one state of the stabilization element, may have a varying depth along its extension in the inner region of the rear side of one or both of the first photovoltaic module and the second photovoltaic module. The stabilization element may have a wedge shape. Advantageously, the stabilization element may dampen vibrations of one or both of the first photovoltaic module and the second photovoltaic module. Advantageously, the stabilization element may reinforce one or both of the first photovoltaic module and the second photovoltaic module. The stabilization element may have a grid, honeycomb or foamed structure. A grid, honeycomb or foamed structure may reinforce the one or both of the first photovoltaic module and the second photovoltaic module. A grid, honeycomb or foamed structure may improve cooling of the one or both of the first photovoltaic module and the second photovoltaic module. In particular, the stabilization element may be air permeable to improve cooling of one or both of the first photovoltaic module and the second photovoltaic module.

The mounting stand may be open below one or both of the first photovoltaic module and the second photovoltaic module to enable airflow in between the photovoltaic modules. Alternatively or additionally, the mounting stand may be open above one or both of the first photovoltaic module and the second photovoltaic module to enable airflow in between the photovoltaic modules. Alternatively or additionally, the mounting stand may be open below or above one or both of the lower photovoltaic module and the upper photovoltaic module to enable airflow in between the photovoltaic modules. Airflow in between the photovoltaic modules may increase the efficiency of photovoltaic modules. In particular, airflow in between the photovoltaic modules may improve cooling of at least one photovoltaic module. For example, cooling a photovoltaic module by 15 degrees Celsius may enhance its electrical power output by about 20 percent.

The stabilization element may be air permeable, in particular to improve cooling of at least one photovoltaic module. The stabilization element may be air permeable to improve cooling of one or both of the first photovoltaic module and the second photovoltaic module.

The mounting stand may comprise a wind turbine and electric generator. The wind turbine may be driven by airflow in between the photovoltaic modules or within the mounting stand. The wind turbine may drive an electric generator to convert mechanical energy to electrical energy. The wind turbine and the electric generator may contribute to or increase the total electrical power output.

A guide case may be arranged with the mounting stand to receive electrical components or cables. The guide case may be arranged next to one or both of the first photovoltaic module and the second photovoltaic module. The guide case may be arranged in between the first photovoltaic module and the second photovoltaic module. The guide case in between the first photovoltaic module and the second photovoltaic module may be protected against external influences, in particular weather or mechanical influences. The guide case or the arrangement of the guide case may shield, in particular protect, electrical components or cables from environmental conditions, in particular rain, snow or hail. The guide case or the arrangement of the guide case may shield electrical components or cables from sun light, in particular UV radiation. The guide case may be exposed to airflow. The guide case may allow electrical components to be cooled.

The mounting stand may be configured for mounting an upper and a lower photovoltaic module. The lower or upper photovoltaic module may be the first or the second photovoltaic module. The lower or upper photovoltaic module may not be the first or the second photovoltaic module. At least one of the upper and the lower photovoltaic module may be pivotally mounted to the mounting stand, in particular the mounting structure. The lower photovoltaic module may have a different inclination than the upper photovoltaic module. The mounting stand may allow the lower and/or the upper photovoltaic module to alter its inclination. Advantageously, mounting at least two photovoltaic modules above each other may allow for efficiently using space. Mounting an upper and a lower photovoltaic module on the mounting stand may enable to increase the electrical power output.

The mounting stand may comprise a mounting frame, supporting the peripheral region of one of the first photovoltaic module and the second photovoltaic module. The outer rear periphery may be less than less than the outer 50 millimeters, in particular less than the outer 20 millimeters, in particular less than the outer 10 millimeters or in particular less than the outer 5 millimeters, of the width or height of the photovoltaic module. The mounting frame may be adapted for mounting a photovoltaic module having curved glass surfaces due to pre-stress.

The mounting stand may be adapted for mounting two or more photovoltaic modules pointing to at least two, in particular to three, in particular to four, different, in particular orthogonal directions. The mounting stand may be adapted for mounting two or more photovoltaic modules pointing to antiparallel directions, in particular East and West or North and South. The plurality of photovoltaic modules may be arranged on a trapezoidal, in particular cubical, tooth-shaped, fir-shaped, plow-shaped or pyramidal, mounting stand.

The mounting stand may comprise at least one of electrical components of the at least two photovoltaic modules, an insect hotel, a windbreak, a cover, an enclosure and a design element.

The stabilization element may comprise or may be entirely made of organic material, in particular wood, cellulose based material, cardboard, hemp, resin, or natural rubber. For example, cellulose based material, cardboard or hemp may be arranged in between one or both of the first photovoltaic module and the stabilization element or, alternatively or additionally, the second photovoltaic module and the stabilization element as a buffer. The mounting stand may provide protection for one or more organic materials. The stabilization element may comprise or may be entirely made of metallic material, in particular aluminum or steel. The stabilization element may comprise or may be entirely made of synthetic material, for example carbon fibers or polymers, in particular rubber, polyvinyl chloride, polypropylene, polystyrene or polycarbonate. The stabilization element may have a grid, a honeycomb, a foamed structure or open pores or closed pores. The stabilization element may be 3D-printed, sintered or molded.

According to a fourth aspect of the invention, a photovoltaic module system comprises a first photovoltaic module, a second photovoltaic module and a mounting stand according to the first, second or third aspect of the invention or a preferred embodiment of one or more aspects of the invention. The first photovoltaic module and the second photovoltaic module are mounted on the mounting structure of the mounting stand.

According to a fifth aspect of the invention, a method for adjusting a photovoltaic module system, in particular a first or a second photovoltaic module, comprises expanding a stabilization element to alter the inclination of the photovoltaic module or contracting the stabilization element to alter the inclination of the photovoltaic module. The method relates to a photovoltaic module system comprising a mounting stand with a stabilization element and a mounting structure. The mounting structure is adapted for mounting the photovoltaic module. The stabilization element is configured to alter the inclination of the photovoltaic module. The method comprises a step of pivoting at least one strut of the mounting structure around a pivot axis, in particular at least during installation of the mounting stand.

According to a sixth aspect of the invention, a method of assembling a photovoltaic module system comprises a step of mounting a first and a second photovoltaic module on a mounting stand. The method of assembling a photovoltaic module system comprises a step of arranging a stabilization element in between rear sides of the first and second photovoltaic modules. The stabilization element may preferably be in contact with the rear sides of the first and second photovoltaic modules. The stabilization element may preferably be in contact with the inner region of the rear sides of the first and second photovoltaic modules. In at least one preferable embodiment, the method of assembling a photovoltaic module system comprises a step of unfolding the mounting stand prior to mounting a photovoltaic module.

According to a seventh aspect of the invention, a mounting stand is used for pivotally mounting at least two photovoltaic modules, which are supported by a stabilization element in their inner region.

The photovoltaic module may comprise one or more photovoltaic cells. The one or more photovoltaic cells of the photovoltaic module may be arranged in an array of photovoltaic cells or a system of photovoltaic cells. A frame may at least partially circumference the arrangement of photovoltaic cells. The frame may comprise or may be made of aluminum. The frame may be adapted to be clamped by a clamp wherein the contact width is more than 1 millimeter, in particular more than 3 millimeters, in particular more than 5 millimeters or 10 millimeters. The photovoltaic module may have a rear side and a front side. The front side may be arranged opposite to the rear side. The photovoltaic module may have a surface of two square meters. The surface may be arranged on the rear side or on the front side. The surfaces on the front side and on the rear side may be equally large. The photovoltaic modules may be about two meters long or one meter wide. In particular, the measures of the photovoltaic module may be of the M10 standard. The photovoltaic module may be biphacial. The photovoltaic module may be adopted for a wind suction load of up to about 2800 Pa or less. Photovoltaic cells may be adapted to convert solar energy into electric energy. Photovoltaic cells may be adapted to provide a direct current (DC) voltage. The power output of the photovoltaic module may depend on external conditions such as weather. The photovoltaic module may comprise a converter for converting DC voltage to alternating current (AC) voltage. The photovoltaic module may comprise electrical components, in particular cabling, one or more isolators, one or more charge controllers, one or more batteries, one or more inverters, one or more fuse boxes, one or more AC isolators or one or more electricity meters.

A mounting stand, in particular a mounting structure of the mounting stand, according to one or more aspects of the invention, may have a width, a height and a depth. The width can be measured along a direction, which is orthogonal to the direction of the height. The direction of the depth may be orthogonal to at least the width direction or the length direction. In particular, a vertical direction is parallel to the height direction. The width direction or depth direction may be in a horizontal plane. The mounting stand for at least two photovoltaic modules may be freestanding.

The mounting stand may be adapted for mounting at least one similar or identical photovoltaic module. The mounting stand may be adapted for being attached to a similar or identical support. The mounting stand may comprise or be entirely made of metal, in particular steel or aluminum, in particular aluminum profiles. The mounting stand may comprise or be entirely made of synthetic material, in particular polymers, in particular plastic or in particular carbon fibers. One or more components of the mounting stand may be molded or 3D-printed or sintered.

The mounting stand of the first, the second or third aspect of the invention may be arranged in a photovoltaic module system according to the fourth aspect of the invention or adjusted according to the method of the fifth aspect of the invention or assembled according to the method of the sixth aspect of the invention or used according to the use of the seventh aspect of the invention.

The figures show exemplary embodiments of the invention:
Figure 1 schematically shows a cross-sectional view of an exemplary embodiment of a photovoltaic module system.
Figure 2 schematically shows a perspective view of an exemplary embodiment of the photovoltaic module system.
Figure 3 schematically shows a cross-sectional view of an exemplary embodiment of a photovoltaic module system.
Figure 4 schematically shows a perspective view of an exemplary embodiment of the photovoltaic module system.
Figure 5 schematically shows a cross-sectional view of an exemplary embodiment of a photovoltaic module system.
Figure 6 schematically shows a cross-sectional view of an exemplary embodiment of a photovoltaic module system.
Figure 7 schematically shows a cross-sectional view of an exemplary embodiment of a photovoltaic module system.
Figure 8 schematically shows a cross-sectional view of an exemplary embodiment of a photovoltaic module system.
Figure 9 schematically shows a cross-sectional view of an exemplary embodiment of a photovoltaic module system.
Figure 10 schematically shows a cross-sectional view of an exemplary embodiment of a photovoltaic module system.
Figure 11 schematically shows a cross-sectional view of an exemplary embodiment of a photovoltaic module system.
Figure 12 schematically shows a cross-sectional view of an arrangement of two photovoltaic module systems.

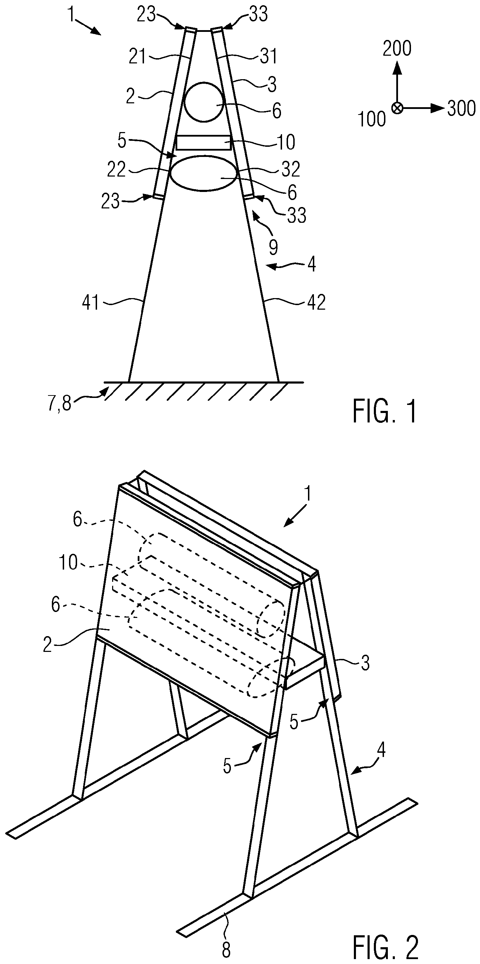

Figure 1 schematically shows a cross-sectional view of an exemplary embodiment of a photovoltaic module system 1. The photovoltaic module system 1 comprises a first photovoltaic module 2, a second photovoltaic module 3 and a mounting stand 4. The mounting stand 4 comprises two stabilization elements 6. A mounting structure 5 of the mounting stand 4 is attached to the ground 7. Alternatively, the photovoltaic module system 1 can be attached to a support 8. The mounting structure 5 is adapted for mounting a first photovoltaic module 2 and a second photovoltaic module 3 thereon. The mounting structure 5 supports a peripheral region 23 of the first photovoltaic module 2. The stabilization element 6 is arranged at a distance to the peripheral region 23 of the first photovoltaic module 2. The mounting structure 5 supports a peripheral region 33 of the second photovoltaic module 3. The stabilization element 5 is arranged at a distance to the peripheral region 33 of the second photovoltaic module 3. The stabilization element 6 supports an inner region 22 of a rear side 21 of the first photovoltaic module 2. The stabilization element 6 supports an inner region 32 of a rear side 31 of the second photovoltaic module 3. The stabilization element 5 is configured to transmit a tensile force from both of the first photovoltaic module 2 and the second photovoltaic module 3. The mounting stand 4 comprises a receiving structure 9 for receiving the first photovoltaic module 2 and the second photovoltaic module 3 as schematically shown in Figure 1. The photovoltaic module system 1 has a height, a width and a depth. In particular, the mounting stand 4 has a height, a width and a depth. In particular, the mounting structure 5 has a height, a width and a depth. A guide case 10 is arranged with the mounting stand 4 to receive electrical components or cables of the one or two photovoltaic modules 2, 3. The mounting stand 4 has two or more struts 41 and 42. The mounting stand 4 is open at least below the first photovoltaic module 2 to enable airflow in between the first photovoltaic module 2 and second photovoltaic module 3.
Figure 2 schematically shows a perspective view of the exemplary embodiment of the photovoltaic module system 1 as shown in Figure 1. In Figure 2, the photovoltaic module system 1 comprises a first photovoltaic module 2, a second photovoltaic module 3 and mounting stand 4 with a mounting structure 5. The mounting stand 4 is attached to a support 8. The mounting stand 4 comprises a guide case 10 and two stabilization elements 6.

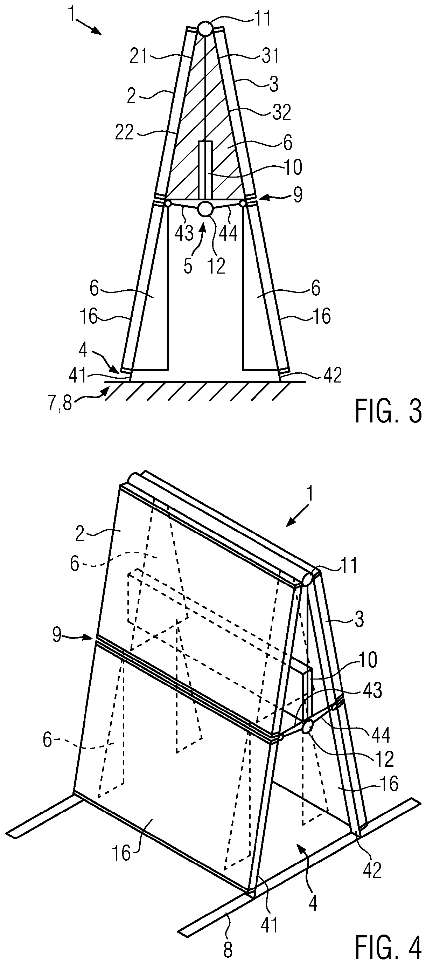

Figure 3 schematically shows a cross-sectional view of an exemplary embodiment of a photovoltaic module system 1, comprising a first photovoltaic module 2, a second photovoltaic module 3, a mounting stand 4 with a mounting structure 5 and lower photovoltaic modules 16. The mounting stand 4 has two struts 41, 42 and an upper pivot axis 11. The struts 41, 42 are adapted to pivot around the pivot axis 11, at least during installation of the mounting stand 4. The photovoltaic module system 1 comprises a mounting stand 4 with a plurality of stabilization elements 6. The stabilization element 6 has a wedge shape. The stabilization element 6 has a varying depth along its extension in the inner region 22, 32 of the rear sides 21, 31 of both of the first photovoltaic module 2 and the second photovoltaic module 3. The mounting stand 4 comprises a guide case 10. The mounting stand 4 comprises struts 43, 44 and a lower pivot axis 12. The struts 43, 44 are mounted pivotally on the struts 41, 42. The mounting stand 4 is foldable. The mounting stand 4 comprises at least one receiving structure 9. The mounting stand 4 allows altering the inclination of at least one of the first photovoltaic module 2 and the second photovoltaic module 3. The mounting structure 5 is attached to a support 8. Figure 4 schematically shows a perspective view of the exemplary embodiment of the photovoltaic module system 1 as shown in figure 3. The photovoltaic module system is attached to a support 8.

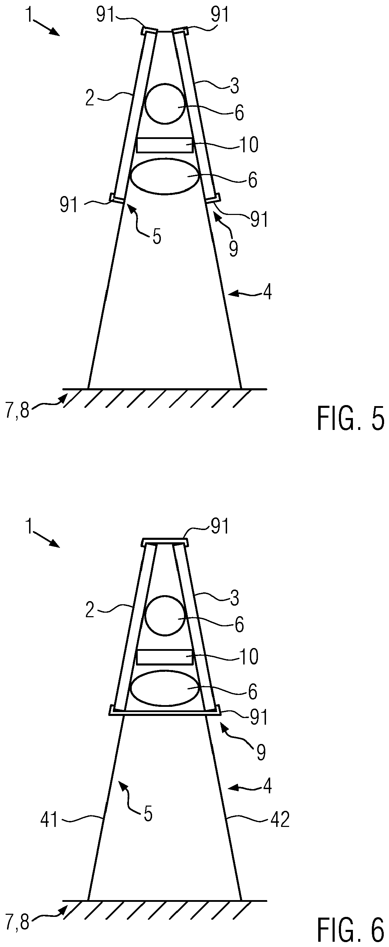

Figure 5 schematically shows a cross-sectional view of an exemplary embodiment of a photovoltaic module system 1 comprising a mounting stand 4 with a mounting structure 5. The mounting stand 4 comprises a receiving structure 9 with receptacles 91 to receive the photovoltaic modules 2 or 3. The receptacles 91 are in the form of a rail structure. The receptacles 91 as shown in Figure 5 are integrally formed with the mounting stand 4. The receiving structure 9 comprises one or more elements (not shown in Figure 5) to close the receptacles 91 in the form of rails. The photovoltaic module systems 1 in Figure 5 has two stabilizing elements 6 and a guide case 10. The mounting stand 4 of the photovoltaic module system 1 is attached to the ground 7 or the support 8.
Figure 6 schematically shows a cross-sectional view of an exemplary embodiment of a photovoltaic module system 1. A mounting stand 4 of the photovoltaic module system 1 has two struts 41, 42. The photovoltaic modules 2 and 3 of the photovoltaic module system 1 can be clamped to the receptacle 91 or can be secured by securing elements 92 (which are not shown in Figure 6). The receptacle 91 of a receiving structure 9 is mounted on the mounting structure 5 of the mounting stand 4. The receiving structure 9 may alternatively at least partially integrally formed with the mounting structure 5. The photovoltaic module system 1 as shown in Figure 6 has two stabilization elements 6 and a guide case 10.

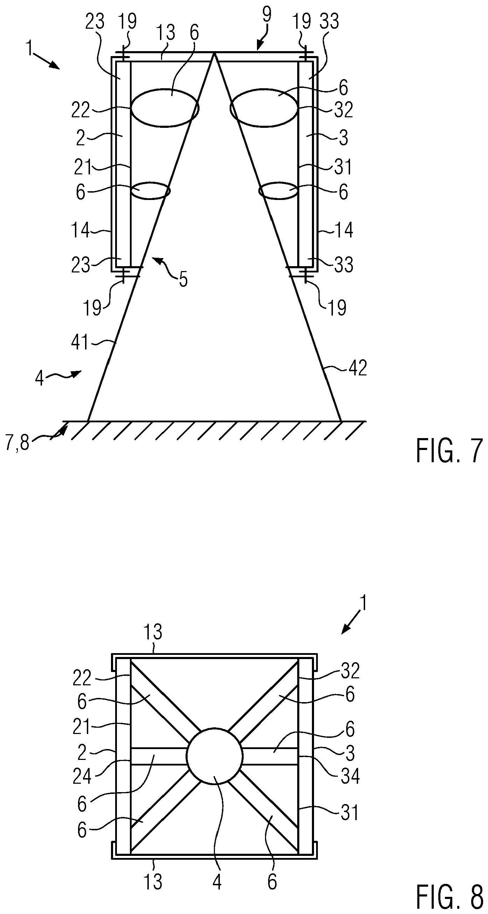

Figure 7 schematically shows a cross-sectional view of an exemplary embodiment of a photovoltaic module system 1. The photovoltaic module system 1 comprises a first photovoltaic module 2, a second photovoltaic module 3 and a mounting stand 4. The mounting stand 4 comprises a mounting structure 5 and struts 41, 42. The mounting stand 4 comprises stabilization elements 6. The stabilization elements 6 are configured to support inner regions 22, 32 of rear sites, 21, 31 of the first photovoltaic module 2 and the second photovoltaic module 3, respectively. In Figure 7, the first photovoltaic module 2 and the second photovoltaic module 3 are vertically oriented, in particular orthogonal to the ground 7 or the support 8. One or more stabilization elements 6 engage the struts 41, 42. The mounting stand 4 comprises a mounting frame 13. The mounting frame 13 supports the outer rare periphery 23, 33 of the first photovoltaic module 2 and the second photovoltaic module 3, respectively. The mounting frame 13 can at least partially be integrally formed with the mounting stand 4 or the mounting structure 5. Alternatively, the mounting frame 13 can be partially mounted to the mounting stand 4 or the mounting structure 5. The photovoltaic modules may be clamped to the mounting frame by a clamp 14. The clamp 14 can be fastened to the mounting frame 13 by fastening elements 15, in particular screws.
Figure 8 schematically shows a cross-sectional view of an exemplary embodiment of a photovoltaic module system 1. The photovoltaic module system 1 comprises a first photovoltaic module 2, a second photovoltaic module 3 and a mounting stand 4. The mounting stand 4 comprises stabilization elements 6, which may be formed as a unit or integrally formed. At least one of the stabilization elements 6 is configured and arranged to support a central region 24, 34 of the rear site 21, 31 of the first photovoltaic module 2 or the second photovoltaic module 3, respectively. At least one stabilization element 6 is configured to support an inner region 22, 32 of the rear site 21, 31 of the first photovoltaic module 2 or the second photovoltaic module 3, respectively. In Figure 8, the inner region 22, 32 does not overlap with the central region 24 or 34 or the peripheral region 23, 33 of the first photovoltaic module 2 or the second photovoltaic module 3, respectively. One or more stabilization elements 6 form a structure similar to a cross or "X". The mounting stand 4 engages with at least one stabilization element 6. The mounting stand 4 further comprises a mounting frame 13 that is attached, in particular removably attached, to the mounting stand 4.

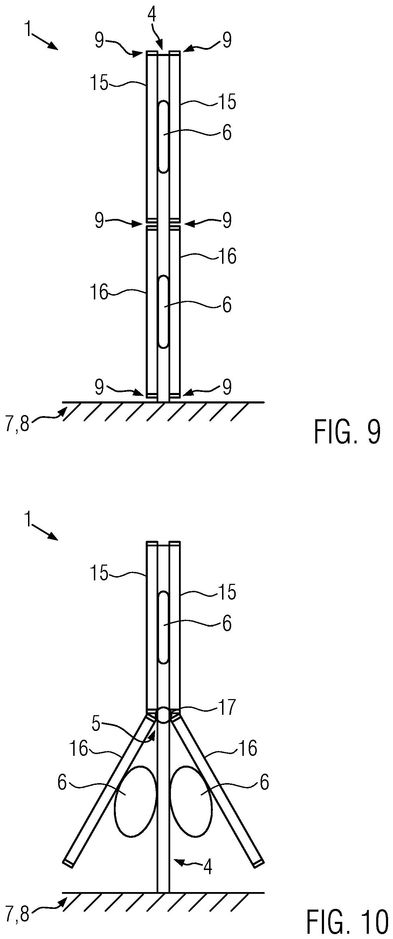

Figure 9 schematically shows an exemplary embodiment of the photovoltaic module system 1 with two upper photovoltaic modules 15 and two lower photovoltaic modules 16. The stabilization element 6 is arranged in between the upper photovoltaic modules 15. The stabilization element 6 is arranged between the lower photovoltaic modules 16. The upper photovoltaic modules 15 are vertically arranged. The lower photovoltaic modules 16 are vertically arranged. The photovoltaic module system 1 comprises a mounting stand 4 with a receiving structure 9. The mounting structure 5 is attached to the ground 7 or the support 8. For example, Figure 9 shows a typical configuration of the photovoltaic module system 1 during night or during winter.
Figure 10 schematically shows a cross-sectional view of an exemplary embodiment of a photovoltaic module system 1. The photovoltaic module system 1 comprises a mounting stand 4 with a mounting structure 5, two upper photovoltaic modules 15 and a stabilization element 6. The stabilization element 6 is arranged between the upper photovoltaic modules 15. The photovoltaic module system 1 comprises two lower photovoltaic modules 16. The mounting stand 4 of the photovoltaic module system 1 allows the lower photovoltaic modules 16 to alter the inclination of at least one of the lower photovoltaic modules 16. The mounting stand 4 is configured to pivotally mount at least one of the lower photovoltaic modules 16 around a pivoting axis 17. The stabilization element 6 is expandable and contractible to alter the inclination of one or both of the lower photovoltaic modules 16. The pivoting axis 17 is parallel to a horizontal direction. The mounting stand 4 comprises a stabilization element 6 being configured to alter the inclination of at least one of the lower photovoltaic modules 16. The mounting stand 4 has a mounting structure 5. The mounting stand 4 is attached to the ground 7 or the support 8. For example, Figure 10 shows a typical configuration of the photovoltaic module system 1 during daytime or during summer.

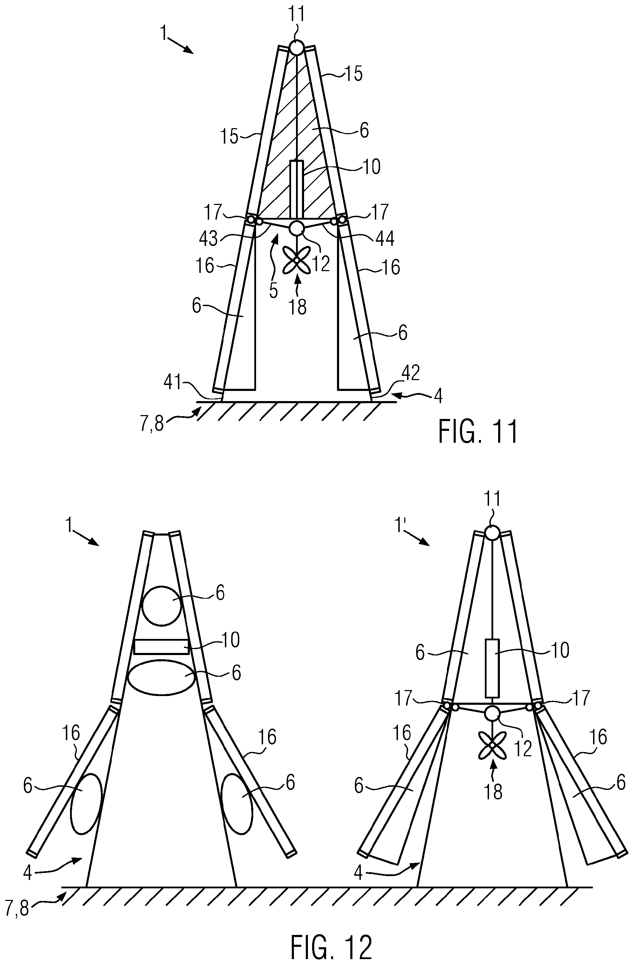

Figure 11 schematically shows a cross-sectional view of an exemplary embodiment of a photovoltaic module system 1. The photovoltaic module system 1 has a mounting stand 4 with a mounting structure 5. The mounting stand 4 has an upper pivot axis 11 and a lower pivot axis 12. The mounting stand 4 has struts 41, 42, 43, 44. The photovoltaic module system 1 comprises a wind turbine 18, which is arranged in between photovoltaic modules 16 or 15. The mounting stand 4 has one or more stabilization elements 6 with a wedge shape. The stabilization element 6 on one or both of the lower photovoltaic modules 16 is arranged such that the depth of the stabilization element 6 decreases with increasing distance from the ground 7 or support 8. The mounting stand 4 has a guide case 10. At least one of the lower photovoltaic modules 16 is pivotally mounted to the mounting structure 5. The mounting stand 4 of the photovoltaic module system 1 is attached to the ground 7 or the support 8.
Figure 12 schematically shows a cross-sectional view of an arrangement of two photovoltaic module systems 1, 1'. In Figure 12, lower photovoltaic modules 16 of the photovoltaic module systems 1 and 1' are pivoted with respect to the mounting stand 4. The photovoltaic module system 1 comprises stabilization elements 6 and a guide case 10. The photovoltaic module system 1' comprises stabilization elements 6, which have a different shape from the stabilization elements in photovoltaic module system 1. The photovoltaic module system 1' comprises a mounting stand 4 with a wind turbine 18, an upper pivot axis 11 and a lower pivot axis 12. The mounting stands 4 of the photovoltaic module systems 1, 1' are attached to the ground 7 or the support 8.

## Claims

1. Mounting stand (4) for at least two photovoltaic modules, comprising:
a mounting structure (5),
wherein the mounting structure (5) is adapted to be attached to the ground (7) or a support (8),
wherein the mounting structure (5) is adapted for mounting a first photovoltaic module (2) and a second photovoltaic module (3) thereon,
**characterized by**
a stabilization element (6),
wherein the stabilization element (6) is configured to support an inner region (22) of a rear side (21) of the first photovoltaic module (2) and to support an inner region (32) of a rear side (31) of the second photovoltaic module (3).

2. The mounting stand according to claim 1, allowing to alter the inclination of one or both of the first photovoltaic module (2) and the second photovoltaic module (3).

3. The mounting stand according to claims 1 or 2, wherein the stabilization element (6) is expandable and contractible to alter the inclination of one or both of the first photovoltaic module (2) and the second photovoltaic module (3).

4. The mounting stand according to any one of the preceding claims, wherein the mounting structure (5) supports a peripheral region (23) of the first photovoltaic module (2), and the stabilization element (6) is arranged at a distance to the peripheral region (23) of the first photovoltaic module (2).

5. The mounting stand according to any one of the preceding claims, wherein the stabilization element (6) is configured to transmit a tensile force from one or both of the first photovoltaic module (2) and the second photovoltaic module (3).

6. The mounting stand according to any one of the preceding claims, wherein the mounting structure (5) is configured to preload the one or both of the first photovoltaic module (2) and the second photovoltaic module (3).

7. The mounting stand according to any one of the preceding claims, wherein the mounting structure (5) has a height and a width, which are both larger than its depth.

8. The mounting stand according to any one of the preceding claims, wherein the mounting stand (4) has two or more struts (41, 42) and an upper pivot axis (11), wherein struts (41, 42) are adapted to pivot around the pivot axis (11) at least during installation of the mounting stand (4).

9. The mounting stand according to any one of the preceding claims, wherein the stabilization element (6), at least in one state of the stabilization element (6), has a varying depth along its extension in the inner region (22, 32) of the rear side (21, 31) of one or both of the first photovoltaic module (2) and the second photovoltaic module (3).

10. The mounting stand according to any one of the preceding claims, wherein the mounting stand (4) is open below one or both of the first photovoltaic module (2) and the second photovoltaic module (3) to enable airflow in between the photovoltaic modules (2, 3).

11. The mounting stand according to any one of the preceding claims, wherein a guide case (10) is arranged with the mounting stand (4) to receive electrical components or cables.

12. The mounting stand according to any one of the preceding claims, wherein the mounting stand (4) is configured for mounting an upper and a lower photovoltaic module (15, 16).

13. Photovoltaic module system (1), comprising a first photovoltaic module (2) and a second photovoltaic module (3), and a mounting stand (4) according to any one of the preceding claims, wherein the first photovoltaic module (2) and the second photovoltaic module (3) are mounted on the mounting structure (5).

14. A method for adjusting a photovoltaic module system (1), wherein the photovoltaic module system (1) comprises a mounting stand (4) with a stabilization element (6) and a mounting structure (5), wherein the mounting structure (5) is adapted for mounting a photovoltaic module (2, 3), comprising at least one of the following steps:
- expanding a stabilization element (6) to alter the inclination of the photovoltaic module or
- contracting the stabilization element (6) to alter the inclination of the photovoltaic module.

15. Use of a mounting stand (4) for pivotally mounting at least two photovoltaic modules (2, 3), which are supported by a stabilization element (6) in their inner region (22, 32).
